# EUROPÄISCHE PATENTANMELDUNG

(11) **EP 4 276 330 A1**
(43) Veröffentlichungstag der Anmeldung: **15.11.2023**
(21) Anmeldenummer: 23171544.2
(22) Anmeldetag: 04.05.2023
(51) Int. Cl.: F16F 15/14, F16F 15/167

(54) **DREHSCHWINGUNGSDÄMPFER**

(30) Priorität: 06.05.2022 DE 102022111314
(71) Anmelder: Hasse & Wrede GmbH, 12681 Berlin (DE)
(72) Erfinder: STEIDL, Michael, 10318 Berlin (DE); WILLEKE, Sebastian, 15366 Hoppegarten (DE); BOHMEYER, Stephan, 15366 Hoppegarten (DE); REINSPERGER, Norbert, 15366 Hoppegarten (DE); STREIFLER, Mandy, 12685 Berlin (DE)
(74) Vertreter: Specht, Peter

(57) **Zusammenfassung**

Ein Drehschwingungsdämpfer (1) mit einem auf einer Antriebswelle eines Motors befestigbaren Nabenteil (2) -auch als Primärmasse bezeichnet- und einem das Nabenteil (2) im radial äußeren Bereich umfassenden Schwungring (3) -auch als Sekundärmasse bezeichnet- wobei zwischen Nabenteil (2) und Schwungring (3) eine Dämpfungseinrichtung vorgesehen ist, wobei der Drehschwingungsdämpfer (1) eine Drehachse (1a) aufweist und wobei der Drehschwingungsdämpfer (1) mindestens eine zusätzlich zur Dämpfungseinrichtung vorgesehene Federeinrichtung (10) als Torsionsfeder aufweist, die das Nabenteil (2) und den Schwungring (3) koppelt, ist derart ausgebildet, dass die mindestens eine Federeinrichtung (10) als mechanische Torsionsfeder parallel und axial beabstandet zu dem Schwungring (3) angeordnet ist.

## Beschreibung

Die vorliegende Erfindung betrifft einen Drehschwingungsdämpfer mit einem auf einer Antriebswelle eines Motors befestigbaren Nabenteil - auch als Primärmasse bezeichnet - und einem das Nabenteil im radial äußeren Bereich umfassenden Schwungring - auch als Sekundärmasse bezeichnet - wobei zwischen dem Nabenteil und dem Schwungring eine Dämpfungseinrichtung vorhanden ist.

Bei der Dämpfungseinrichtung kann es sich beispielsweise um ein visco-elastisches Fluid, wie z.B. Silikonöl handeln, das in einer Kammer zwischen Primärteil und Sekundärteil aufgenommen ist, so wie es beispielsweise aus der DE 10 2016 113 719 A1 bekannt ist. Es ist auch möglich, dass die Dämpfungseinrichtung wenigstens ein mit dem Nabenteil und dem Schwungring verbundenes Elastomerelement aufweist.

Solche Drehschwingungsdämpfer, die zum Dämpfen von unerwünschten Drehschwingungen vorgesehen sind, wie sie beispielsweise an Verbrennungsmotoren mit Hubkolben entstehen, haben sich in der Praxis sehr gut bewährt. Nachteilig ist jedoch eine für die jeweilige Anwendung solcher Drehschwingungsdämpfer nicht ausreichende Torsionssteifigkeit, wodurch der Dämpfer nicht optimal auf seinen Anwendungsfall hin ausgelegt werden kann.

Aus dem Stand der Technik ist es seit langem bekannt, solche Drehschwingungsdämpfer mit zusätzlichen radial zur Drehachse angeordneten Torsionsfedern auszurüsten, so dass eine ausreichende Torsionssteifigkeit eines solchen Drehschwingungsdämpfers gegeben ist. Derart ausgeführte Drehschwingungsdämpfer finden sich beispielsweise in der DE 32 38 572 A1, in der DE 198 39 470 A1, in der DE 10 2009 004 252 A1 sowie in der EP 0 955 484 A1.

Nachteilig an diesen Lösungen ist sowohl der konstruktive als auch der fertigungstechnische Aufwand solcher radial zur Drehachse angeordneten Torsionsfedern als auch die durch die radial zur Drehachse angeordneten Torsionsfedern nicht einfacher werdende Auslegung eines solchen Drehschwingungsdämpfers.

Der Erfindung liegt daher die Aufgabe zugrunde, einen Drehschwingungsdämpfer der gattungsgemäßen Art so weiterzuentwickeln, dass eine kostengünstigere Gestaltung der zusätzlichen Torsionsfeder sowie eine vereinfachte Auslegung der Torsionsfeder möglich wird.

Diese Aufgabe wird durch einen Drehschwingungsdämpfer mit den Merkmalen des Anspruchs 1 gelöst.

Ein erfindungsgemäßer Drehschwingungsdämpfer mit einem auf einer Antriebswelle eines Motors befestigbaren Nabenteil -auch als Primärmasse bezeichnet- und einem das Nabenteil im radial äußeren Bereich umfassenden Schwungring - auch als Sekundärmasse bezeichnet- wobei zwischen Nabenteil und Schwungring eine Dämpfungseinrichtung vorgesehen ist, wobei der Drehschwingungsdämpfer eine Drehachse aufweist und wobei der Drehschwingungsdämpfer mindestens eine zusätzlich zur Dämpfungseinrichtung vorgesehene Federeinrichtung als Torsionsfeder aufweist, die das Nabenteil und den Schwungring koppelt, ist derart ausgebildet, dass die mindestens eine Federeinrichtung als mechanische Torsionsfeder parallel und axial beabstandet zu dem Schwungring angeordnet ist.

Es ergibt sich der besondere Vorteil eines Drehschwingungsdämpfers mit einerseits höherer mechanischer Steifigkeit, und weiterhin mit einer Steifigkeit, die unabhängig von der Dämpfung eingestellt werden kann, und andererseits eine Steifigkeit, die weder temperatur- noch frequenz- noch amplitudenabhängig ist und gleichzeitig deutlich günstiger in der Herstellung als der Stand der Technik.

Außerdem gibt es einen weiteren Vorteil, dass eine optimale Abstimmung erreicht werden kann, insbesondere auch für niedrige Frequenzen, bei denen Silikonöl nur eine geringe Steifigkeit hat.

Die zumindest eine zusätzliche Torsionsfeder ist konstruktiv einfach und kompakt realisierbar und an verschiedenste Einsatzzwecke durch einfache Auslegungsversuche und ggf. -berechnungen anpassbar. Ihre Federwirkung resultiert hauptsächlich auf einer Torsion um die Drehachse des Drehschwingungsdämpfers. Der Drehschwingungsdämpfer kann vorteilhaft kompakt, insbesondere in axialer Richtung, aufgebaut werden.

Bei der Dämpfungseinrichtung kann es sich auch erfindungsgemäß beispielsweise um ein visco-elastisches Fluid, wie z.B. Silikonöl handeln, das in einer Kammer zwischen Primärteil und Sekundärteil aufgenommen ist, beispielsweise so, wie es insoweit aus der DE 10 2016 113 719 A1 bekannt ist. Es ist aber alternativ auch möglich, dass die Dämpfungseinrichtung auf andere Weise, so durch ein Elastomerelement realisiert ist.

In einer Ausführung ist es vorgesehen, dass die mindestens eine Federeinrichtung einen Innenring mit Speichen und einen Außenring mit Speichen umfasst. Damit ergibt sich ein vorteilhaft flacher Aufbau.

Es ist vorteilhaft, dass in weiterer Ausführung die mindestens eine Federeinrichtung Federeinheiten aufweist, welche jeweils zwischen zwei Speichen angeordnet und mit diesen gekoppelt sind.

In einer weiteren vorteilhaften Ausführung ist der Innenring mit dem Nabenteil direkt oder indirekt drehfest verbunden, und der Außenring ist mit dem Schwungring direkt oder indirekt drehfest verbunden. Dieser Aufbau ist kompakt und einfach.

Hierbei kann es vorgesehen sein, dass der Außenring über einen Distanzring mit dem Schwungring drehfest verbunden ist. Dieser Distanzring bietet vorteilhafterweise die Möglichkeit, dass er nicht nur eine Befestigungsmöglichkeit mit Abstand zum Schwungring schafft, sondern auch gleichzeitig eine Befestigung für einen mehrteiligen Schwungring bildet, dessen Teile somit zusammen fixiert werden können.

Eine alternative Ausführung schafft einen Drehschwingungsdämpfer, bei welchem die mindestens eine Federeinrichtung Federelemente, welche zwischen dem Nabenteil und dem Schwungring angebracht sind, und eine torsionssteife Scheibe umfasst. Dies ergibt eine vorteilhaft einfache Anordnung und Montage.

In einer weiteren Ausführung der Alternative ist die torsionssteife Scheibe auf einer Stirnseite eines Wandabschnitts des Nabenteils direkt oder indirekt drehfest befestigt. Damit ist ein vorteilhaft einfacher und kompakter Aufbau geschaffen

Eine noch weitere Ausführung der Alternative sieht vor, dass die Federelemente auf einem Teilkreis der Scheibe derart angeordnet sind, dass die Federelemente jeweils mit einem Ende mit der Scheibe und jeweils mit einem anderen Ende mit dem Schwungring direkt oder indirekt verbunden sind, wobei die Federelemente auf diese Weise das Nabenteil und den Schwungring koppeln. Ein Vorteil hierbei besteht darin, dass ein flacher und axial deutlich kürzerer Aufbau im Vergleich zum Stand der Technik ermöglicht werden kann.

Es ist vorteilhaft in einer noch weiteren Ausführung der Alternative, wenn die Federelemente als Schraubendruckfedern ausgebildet sind, da auf diese Weise handelsübliche und kostengünstige Bauteile hoher Qualität eingesetzt werden können.

Eine Ausführung sieht vor, dass die mindestens eine Federeinrichtung als mechanische Torsionsfeder außerhalb eines Bereiches angeordnet ist, der weder Öl noch visco-elastisches Fluid aufweist. Da auf diese Weise die Torsionsfeder nicht in einem Bereich mit Öl bzw. visco-elastischem Fluid läuft, kann eine vorteilhaft optimale Abstimmung der erzielt werden, insbesondere auch für niedrige Frequenzen, bei denen Öl bzw. visco-elastisches Fluid nur eine geringe Steifigkeit aufweist.

Ein besonders bedeutender Vorteil besteht darin, dass bei dem erfindungsgemä-ßen Drehschwingungsdämpfer eine unabhängig von der Dämpfung beliebig einstellbare Steifigkeit bessere Abstimmung und deutlich reduzierte Verlustleistung des Systems ermöglicht, zusätzlich entfällt die Temperatur- Frequenz- und Amplitudenabhängigkeit.

In einer noch weiteren Ausführung ist das Nabenteil im Bereich eines Bodenabschnitts umlaufend mit dem Flansch drehfest verbunden, wodurch ein vorteilhaft kompakter Aufbau ermöglicht wird.

Eine Ausführung sieht vor, dass der mit dem Nabenteil verbundene Flansch in radialer Richtung in einer Art C-Form ausgebildet ist. Ein Vorteil dieser C-Form besteht darin, dass dadurch gleichzeitig eine radiale Festlegung des Flansches geschaffen ist.

Ein Anwendungsbereich besteht als Drehschwingungsdämpfer, im Besonderen bei größeren Installationen/Motoren.

Weitere vorteilhafte Ausbildungen der Erfindung sind den Unteransprüchen zu entnehmen.

Einige Ausführungsbeispiele der Erfindung werden nachfolgend anhand der beigefügten Zeichnungen beschrieben. Die Erfindung ist nicht auf diese Ausführungsbeispiele beschränkt. Insbesondere sind einzelne Merkmale der nachfolgenden Ausführungsbeispiele nicht nur bei diesen, sondern auch bei anderen Ausführungsbeispielen einsetzbar. Es zeigen:
- Figur 1:: eine Schnittdarstellung eines Ausführungsbeispiels eines erfindungsgemäßen Drehschwingungsdämpfers;
- Figur 2-3:: Perspektivansichten des Ausführungsbeispiels des erfindungsgemäßen Drehschwingungsdämpfers nach Figur 1; und
- Figur 4:: eine Schnittdarstellung einer Variante des Ausführungsbeispiels des erfindungsgemäßen Drehschwingungsdämpfers nach Figur 1.

Im Folgenden beziehen sich Begriffe wie "außen" oder "innen" auf die jeweilige Zeichnungsebene sowie "axial" sowie "radial" auf die Drehachse des Drehschwingungsdämpfers.

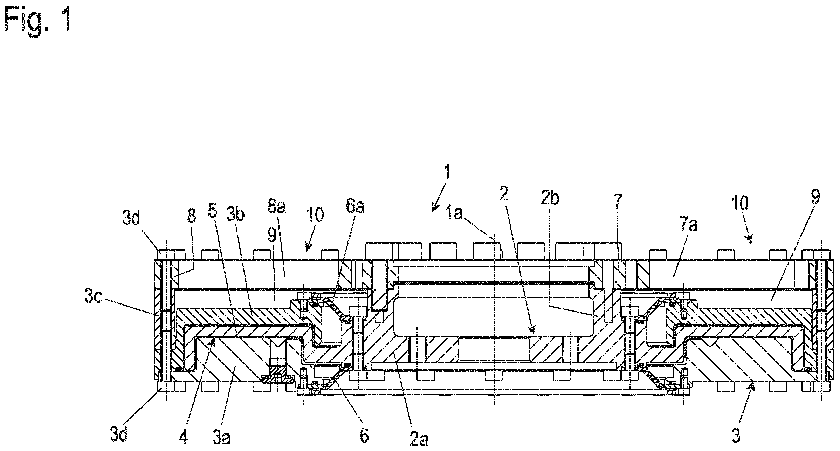

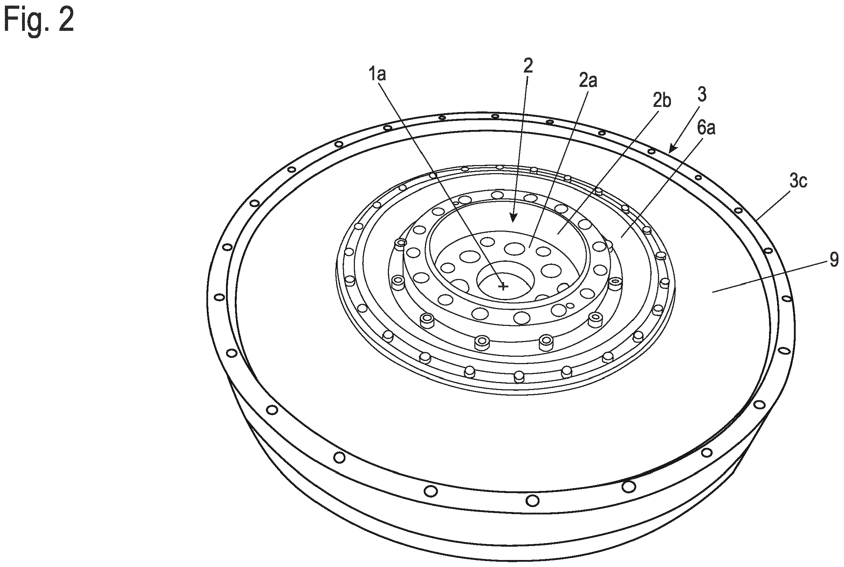

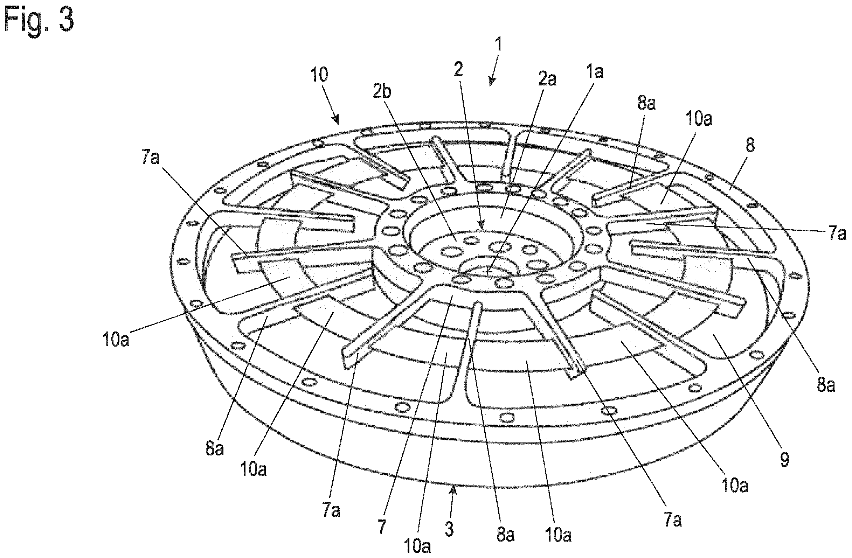

**Figur 1** stellt ein Ausführungsbeispiel eines erfindungsgemäßen Drehschwingungsdämpfers 1 dar. **Figur 2-3** zeigen Perspektivansichten des ersten Ausführungsbeispiels des erfindungsgemäßen Drehschwingungsdämpfers nach Figur 1.

Der Drehschwingungsdämpfer 1 mit einer Drehachse 1a umfasst ein auf einer Antriebswelle eines Motors (nicht gezeigt, aber vorstellbar) befestigbares Nabenteil 2, einen Schwungring 3, einen Spalt 4, einen Flansch 5, der ein Dämpfungselement einer Dämpfungseinrichtung bildet, und mindestens eine Federeinrichtung 10.

Das Nabenteil 2 kann auch als Primärmasse bezeichnet werden und weist einen flanschartigen Bodenabschnitt 2a mit einem in Axialrichtung darauf angeformten kreiszylindrischen Wandabschnitt 2b auf. Das Nabenteil 2 ist im Bereich des Bodenabschnitts 2a umlaufend mit dem Flansch 5 drehfest verbunden. In radialer Richtung ist der Flansch 5 hier in einer Art C-Form ausgebildet. Dadurch wird eine radiale Festlegung ermöglicht.

Der Schwungring 3, der auch als Sekundärmasse bezeichnet wird, ist ein außenliegender Schwungring 3, welcher das Nabenteil 2 im radial äußeren Bereich umfasst. Der Schwungring 3 weist hier zwei koaxiale Bauteile auf, nämlich einen Basisabschnitt 3a und einen Deckabschnitt 3b. Der Basisabschnitt 3a und der Deckabschnitt 3b umschließen den Spalt 4, dessen Ausbildung zu der C-Form des Flansches 5 korrespondiert.

Der Basisabschnitt 3a und der Deckabschnitt 3b des Schwungrings 3 sind an ihren umlaufenden Außenrändern mittels Befestigungselementen 3d zusammen und mit einem umlaufenden peripheren Distanzring 3c an dessen einer Stirnseite, die zum Bodenabschnitt 3a des Schwungrings 3 weist, verbunden. Auf diese Weise ist der Spalt 4 nach außen hin abgedichtet. Die anderen Enden des Spaltes 4 sind durch zwei gegenüberliegende Dichtelemente 6 und 6a dergestalt abgedichtet, dass ein erstes Dichtelement 6 zwischen dem Bodenabschnitt 3a des Schwungrings 3 und dem Flansch 5 und ein zweites Dichtelement 6a auf der gegenüberliegenden Seite zwischen dem Deckabschnitt 3b des Schwungrings 3 und dem Flansch 5 jeweils im Übergangsbereichs des Flansches 5 zu dem Bodenabschnitt 2a des Nabenteils 2 befestigt ist.

Der Distanzring 3c erstreckt sich in Richtung der Drehachse 1a etwa in gleicher axialer Länge des Wandabschnitts 2b des Nabenteils 2.

In dem Spalt 4 ist der Flansch 5 angeordnet, wobei der Spalt 4 mit einem visko-elastischen Fluid gefüllt ist. Bei dem visko-elastischen Fluid handelt es sich vorzugsweise um Silikonöl.

Der Bodenabschnitt 2a des Nabenteils 2 kann auf einem Teilkreis am Umfang verteilte Bohrungen aufweisen, die zur Befestigung des Drehschwingungsdämpfers 1 z.B. an einer Kurbelwelle eines Verbrennungsmotors, dienen. Der Bodenabschnitt 2a des Nabenteils 2 kann auch einen konzentrischen Durchbruch aufweisen.

In **Figur 2** ist eine perspektivische Draufsicht auf die Seite des Deckabschnitts 3b des Schwungrings 3 des Drehschwingungsdämpfers 1 nach Figur 1 dargestellt.

Das zweite Dichtelement 6a ist zwischen dem Deckabschnitt 3b und dem Nabenteil 2 hier mit jeweiligen Schrauben als Befestigungselementen angebracht.

Ein Zwischenraum 9, der im Weiteren noch beschrieben wird, ist nach unten durch den Deckabschnitt 3b, nach außen durch den Distanzring 3c und nach innen durch das Nabenteil 2 begrenzt.

**Figur 2** zeigt eine perspektivische Draufsicht auf den Drehschwingungsdämpfer 1 nach Figur 1 und 2, wobei der Zwischenraum nach oben durch Speichen 7a eines Innenrings 7 und Speichen 8a eines Außenrings 8 bedeckt ist.

Parallel axial beabstandet zu dem Schwungring 3 ist die mindestens eine Federeinrichtung 10, die eine mechanische Torsionsfeder bildet, angeordnet. So umfasst die mindestens eine Federeinrichtung 10 den Innenring 7 mit seinen Speichen 7a und den Außenring 8 mit seinen Speichen 8a.

Der Innenring 7 ist auf einer Stirnseite des Wandabschnitts 2b des Nabenteils 2 drehfest angebracht, z.B. mit Schrauben. Auf der anderen Stirnseite des Distanzrings 3c ist der Außenring 8 mit Befestigungselementen 3d befestigt.

Der Innenring 7 weist die sich radial nach außen erstreckenden Speichen 7a mit freien Enden auf. Der Außenring 8 ist mit ebenfalls mit Speichen 8a verbunden, die radial nach innen zu der Drehachse 1a hin verlaufen und freie Enden aufweisen. Die Speichen 7a des Innenrings 7 und die Speichen 8a des Außenrings 8 sind abwechselnd in einer Ebene angeordnet.

Zwischen den Speichen 7a und 8a, der freien Seite des Deckabschnitts 3b des Schwungrings 3 und des Distanzrings 3c ist der Zwischenraum 9 gebildet.

Die Federeinrichtung 10 weist Federeinheiten 10a auf. Die Federeinheiten 10a können auch in dem Zwischenraum 9 angeordnet sein.

Die Speichen 7a, 8a, der Zwischenraum 9 und der Schwungring 3 sind koaxial, aber axial von einander beabstandet angeordnet.

Die Speichen 7a, 8a sind untereinander mittels einer jeweiligen Federeinheit 10a gekoppelt. Die Federeinrichtungen 10 bildet in dieser Ausführung mit den Federeinheiten 10a eine mechanische Torsionsfeder, welche das Nabenteil 2 über den Innenring 7 mit den Speichen 7a über die Speichen 8a und den Außenring 8 und Distanzring 3c mit dem Schwungring 3 koppelt. Mit anderen Worten, der Schwungring 3 kann sich auf diese Weise gegenüber dem Nabenteil 2 verdrehen.

Auf diese Weise ist der Dämpfer mit dem außenliegendem Schwungring 3 mit einer mechanischen Torsionsfeder in Gestalt der Federeinrichtung 10 mit den Federeinheiten 10a gekoppelt.

Die mechanische Torsionsfeder in Gestalt der Federeinrichtung 10 ist außerhalb des mit visko-elastischen Fluid gefüllten Spaltes 4 in dem Zwischenraum 9 ohne Öl angeordnet.

Die Federeinheiten 10a können aus unterschiedlichen Federarten aufgebaut sein. Auch sind zusätzliche Dämpfungselemente möglich.

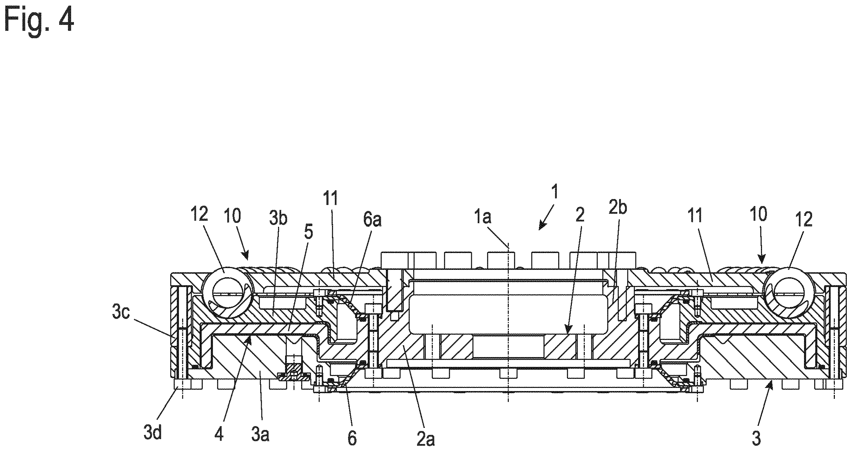

**Figur 4** zeigt eine Schnittdarstellung einer Variante des Ausführungsbeispiels des erfindungsgemäßen Drehschwingungsdämpfers 1 nach Figur 1.

Der Aufbau des Nabenteils 2 mit Bodenabschnitt 2a und Wandabschnitt 2b, des Schwungrings 3 mit dem Bodenabschnitt 3a und dem Deckabschnitt 3b sowie des Spalts 4 mit Flansch 5 und den Dichtelementen 6, 6a entspricht im Wesentlichen dem oben beschriebenen Aufbau des Drehschwingungsdämpfers 1 nach Figur 1.

Im Unterschied dazu dient der Distanzring 3c hier nur als Befestigungsteil für die Befestigungselemente 3d des Schwungrings 3. Anstelle des Distanzrings 3c kann auch jeweils eine Gegenmutter für jedes Befestigungselement 3d, das hier beispielsweise eine Schraube ist, dienen.

Die Federeinrichtung 10 umfasst hier Federelemente 12, welche zwischen dem Nabenteil 2 und dem Schwungring 3 angebracht sind. Weiterhin umfasst die Federeinrichtung eine torsionssteife Scheibe 11. Die Federelemente 12 sind hier als Schraubendruckfedern ausgebildet.

Die eine torsionssteife Scheibe 11 ist auf der Stirnseite des Wandabschnitts 2b des Nabenteils 2 direkt oder indirekt befestigt. Hierzu sind nicht bezeichnete Schrauben verwendet.

Die Scheibe 11 ist nur an dem Nabenteil 2 befestigt, aber nicht an dem Distanzring 3c und somit auch nicht an dem Schwungring 3.

Auf einem Teilkreis der Scheibe 11, der hier etwa drei Viertel des Gesamtdurchmessers der Scheibe 11 beträgt, sind die Federelemente 12 angeordnet, welche zwischen dem Nabenteil 2 (mittels der Scheibe 11) und dem Deckabschnitt 3b des Schwungrings 3 angebracht sind. Dabei sind die Federelemente 12 jeweils mit einem Ende mit der Scheibe 11 und jeweils mit einem anderen Ende mit dem Schwungring 3 bzw. mit dem Deckabschnitt 3b des Schwungrings 3 verbunden. Die Federelemente 12 koppeln auf diese Weise als Schraubendruckfedern das Nabenteil 2 und den Schwungring 3.

Die axial nach oben bzw. außen weisende Seite des Deckabschnitts 3b des Schwungrings 3 ist hier an die Form der Federelemente 12 angepasst.

Auch hier ist die Federeinrichtung 10 mit den Federelementen 12 außerhalb des Spaltes 4 und somit ohne visko-elastisches Fluid angeordnet.

Diese oben beschriebenen Ausführungen des erfindungsgemäßen Drehschwingungsdämpfers können im Besonderen bei größeren Installationen/Motoren verwendet werden.

Die Kombination aus außenliegendem Schwungring und einer mechanischen Torsionsfeder, die nicht in einem visco-elastischen Fluid angeordnet ist, ermöglicht eine unabhängig von der Dämpfung beliebig einstellbare Steifigkeit. Daraus ergibt sich eine bessere Abstimmung und deutlich reduzierte Verlustleistung des Systems, zusätzlich entfällt die Temperatur- Frequenz- und Amplitudenabhängigkeit.

Es ergibt sich somit ein Drehschwingungsdämpfer 1 mit einer hohen mechanischen Steifigkeit, einer Steifigkeit, die unabhängig von der Dämpfung eingestellt werden kann, und eine Steifigkeit, die weder temperatur- noch frequenz- noch amplitudenabhängig ist und einen kurzen axialer Aufbau aufweist.

### BEZUGSZEICHENLISTE

| | |
|---|---|
| Drehschwingungsdämpfer | 1 |
| Drehachse | 1a |
| Nabenteil | 2 |
| Bodenabschnitt | 2a |
| Wandabschnitt | 2b |
| Schwungring | 3 |
| Basisabschnitt | 3a |
| Deckabschnitt | 3b |
| Distanzring | 3c |
| Befestigungselement | 3d |
| Spalt | 4 |
| Flansch | 5 |
| Dichtelement | 6, 6a |
| Innenring | 7 |
| Speiche | 7a |
| Außenring | 8 |
| Speiche | 8a |
| Zwischenraum | 9 |
| Federeinrichtung | 10 |
| Federeinheit | 10a |
| Scheibe | 11 |
| Federelement | 12 |

## Patentansprüche

1. Drehschwingungsdämpfer (1) mit einem auf einer Antriebswelle eines Motors befestigbaren Nabenteil (2) -auch als Primärmasse bezeichnet- und einem das Nabenteil (2) im radial äußeren Bereich umfassenden Schwungring (3) - auch als Sekundärmasse bezeichnet- wobei zwischen Nabenteil (2) und Schwungring (3) eine Dämpfungseinrichtung vorgesehen ist, wobei der Drehschwingungsdämpfer (1) eine Drehachse (1a) aufweist und wobei der Drehschwingungsdämpfer (1) mindestens eine zusätzlich zur Dämpfungseinrichtung vorgesehene Federeinrichtung (10) als Torsionsfeder aufweist, die das Nabenteil (2) und den Schwungring (3) koppelt,
**dadurch gekennzeichnet, dass**
die mindestens eine Federeinrichtung (10) als mechanische Torsionsfeder parallel und axial beabstandet zu dem Schwungring (3) angeordnet ist.

2. Drehschwingungsdämpfer (1) nach Anspruch 1, **dadurch gekennzeichnet, dass** die mindestens eine Federeinrichtung (10) einen Innenring (7) mit Speichen (7a) und einen Außenring (8) mit Speichen (8a) umfasst.

3. Drehschwingungsdämpfer (1) nach Anspruch 2, **dadurch gekennzeichnet, dass** die mindestens eine Federeinrichtung (10) Federeinheiten (10a) aufweist, welche jeweils zwischen zwei Speichen (7a, 8a) angeordnet und mit diesen gekoppelt sind.

4. Drehschwingungsdämpfer (1) nach Anspruch 1, 2, oder 3 **dadurch gekennzeichnet, dass** der Innenring (7) mit dem Nabenteil (2) direkt oder indirekt drehfest verbunden ist, und dass der Außenring (8) mit dem Schwungring (3) direkt oder indirekt drehfest verbunden ist.

5. Drehschwingungsdämpfer (1) nach Anspruch 4, **dadurch gekennzeichnet, dass** der Außenring (8) über einen Distanzring (3c) mit dem Schwungring (3) drehfest verbunden ist.

6. Drehschwingungsdämpfer (1) nach Anspruch 1, **dadurch gekennzeichnet, dass** die mindestens eine Federeinrichtung (10) Federelemente (12), welche zwischen dem Nabenteil (2) und dem Schwungring (3) angebracht sind, und eine torsionssteife Scheibe (11) umfasst.

7. Drehschwingungsdämpfer (1) nach Anspruch 6, **dadurch gekennzeichnet, dass** die torsionssteife Scheibe (11) auf einer Stirnseite eines Wandabschnitts (2b) des Nabenteils (2) direkt oder indirekt drehfest befestigt ist.

8. Drehschwingungsdämpfer (1) nach Anspruch 7, **dadurch gekennzeichnet, dass** die Federelemente (12) auf einem Teilkreis der Scheibe (11) derart angeordnet sind, dass die Federelemente (12) jeweils mit einem Ende mit der Scheibe (11) und jeweils mit einem anderen Ende mit dem Schwungring (3) direkt oder indirekt verbunden sind, wobei die Federelemente (12) auf diese Weise das Nabenteil (2) und den Schwungring (3) koppeln.

9. Drehschwingungsdämpfer (1) nach Anspruch 8, **dadurch gekennzeichnet, dass** die Federelemente (12) als Schraubendruckfedern ausgebildet sind.

10. Drehschwingungsdämpfer (1) nach einem der vorstehenden Ansprüche,
**dadurch gekennzeichnet, dass** die mindestens eine Federeinrichtung (10) als mechanische Torsionsfeder außerhalb eines Bereiches angeordnet ist, der weder Öl noch visco-elastisches Fluid aufweist.

11. Drehschwingungsdämpfer (1) nach einem der vorstehenden Ansprüche,
**dadurch gekennzeichnet, dass** das Nabenteil (2) im Bereich eines Bodenabschnitts (2a) umlaufend mit dem Flansch (5) drehfest verbunden ist.

12. Drehschwingungsdämpfer (1) nach Anspruch 11, **dadurch gekennzeichnet, dass** der mit dem Nabenteil (2) verbundene Flansch (5) in radialer Richtung in einer Art C-Form ausgebildet ist.
